# EUROPÄISCHE PATENTANMELDUNG

(11) **EP 1 617 633 A1**
(43) Veröffentlichungstag der Anmeldung: **18.01.2006**
(21) Anmeldenummer: 05015219.8
(22) Anmeldetag: 13.07.2005
(51) Int. Cl.: H04M 1/247, H04Q 7/32

(54) **Sicherheitsmodul für ein Mobilfunktelefon**

(30) Priorität: 15.07.2004 DE 102004034233
(71) Anmelder: Giesecke & Devrient GmbH, 81677 München (DE)
(72) Erfinder: Hartel, Karl Eglof, 80689 München (DE); Albert, Bodo, 81377 München (DE)

(57) **Zusammenfassung**

Die Erfindung betrifft ein Sicherheitsmodul (2) für ein Mobilfunktelefon (1), das über eine Anzeige (5) zur Darstellung eines Menüs zur Unterstützung der Bedienung des Mobilfunktelefons (1) verfügt. Das erfindungsgemäße Sicherheitsmodul (2) zeichnet sich dadurch aus, dass darin eine Funktionalität zur Beeinflussung der Ausgestaltung des vom Mobilfunktelefon (1) angezeigten Menüs abhängig von wenigstens einer mit der Nutzung des Mobilfunktelefons (1) in Zusammenhang stehenden Größe implementiert ist.

## Beschreibung

Die Erfindung betrifft ein Sicherheitsmodul für ein Mobilfunktelefon. Weiterhin betrifft die Erfindung ein mit einem derartigen Sicherheitsmodul ausgerüstetes Mobilfunktelefon sowie ein Verfahren zum Betreiben eines Sicherheitsmoduls.

Mobilfunktelefone sind üblicherweise mit einem Sicherheitsmodul ausgerüstet, das als eine Chipkarte ausgebildet ist, die in das Mobilfunktelefon eingesteckt ist. Das Sicherheitsmodul dient insbesondere dazu, einem Mobilfunkanbieter gegenüber einen Nachweis über eine Zugangsberechtigung zum Mobilfunknetz zu erbringen. Hierzu ist im Sicherheitsmodul eine eindeutige Teilnehmeridentität gespeichert, auf deren Basis auch eine Abrechnung der mit dem Mobilfunktelefon geführten Gespräche erfolgen kann. Im Sicherheitsmodul können auch mehrere Teilnehmeridentitäten gespeichert sein, mit denen jeweils eine Anmeldung im Mobilfunknetz erfolgen kann. So kann beispielsweise je eine eigene Teilnehmeridentität für private Nutzung und eine geschäftliche Nutzung des Mobilfunktelefons vorgesehen sein. Ebenso ist es möglich, unterschiedliche Teilnehmeridentitäten für eine Abrechnung über ein vorausbezahltes Guthaben oder über eine nachträgliche Rechnung vorzusehen. Abhängig davon, mit welcher Teilnehmeridentität die Anmeldung im Mobilfunknetz erfolgt, können ein unterschiedliches Nutzungsverhalten und/oder unterschiedliche Rahmenbedingungen vorliegen, so dass beim Mobilfunktelefon in der Regel nicht für alle Teilnehmeridentitäten ein gleichermaßen optimaler Bedienungskomfort zur Verfügung steht.

Der Erfindung liegt die Aufgabe zugrunde, eine komfortable Nutzung eines Mobilfunktelefons zu ermöglichen.

Diese Aufgabe wird durch die Merkmalskombination des Anspruchs 1 gelöst.

Das erfindungsgemäße Sicherheitsmodul für ein Mobilfunktelefon, das über eine Anzeige zur Darstellung eines Menüs zur Unterstützung der Bedienung des Mobilfunktelefons verfügt, zeichnet sich dadurch aus, dass darin eine Funktionalität zur Beeinflussung der Ausgestaltung des vom Mobilfunktelefon angezeigten Menüs abhängig von wenigstens einer mit der Nutzung des Mobilfunktelefons in Zusammenhang stehenden Größe implementiert ist.

Die Erfindung hat den Vorteil, dass vom Mobilfunktelefon jeweils ein Menü angezeigt wird, das auf die aktuellen Verhältnisse abgestimmt ist und dadurch eine komfortable Nutzung des Mobilfunktelefons möglich ist.

Im Sicherheitsmodul können mehrere Teilnehmeridentitäten zur Anmeldung des Mobilfunktelefons in einem Mobilfunknetz gespeichert sein. In diesem Fall ist es von Vorteil, wenn die Beeinflussung der Ausgestaltung des vom Mobilfunktelefon angezeigten Menüs abhängig davon erfolgt, mit welcher Teilnehmeridentität das Mobilfunktelefon im Mobilfunknetz angemeldet ist.

Ebenso ist es auch möglich, dass die Beeinflussung der Ausgestaltung des vom Mobilfunktelefon angezeigten Menüs abhängig vom Aufenthaltsort des Mobilfunktelefons erfolgt. Dadurch können beispielsweise lokal verfügbare Dienste gezielt im Menü berücksichtigt werden. Weiterhin kann die Beeinflussung der Ausgestaltung des vom Mobilfunktelefon angezeigten Menüs abhängig vom verfügbaren Mobilfunknetz erfolgen. Dies hat den Vorteil, dass das Menü jeweils auf die Besonderheiten des aktuell verfügbaren Mobilfunknetzes abgestimmt werden kann.

Zusätzlich zur Beeinflussung des Menüs kann abhängig von der mit der Nutzung des Mobilfunktelefons in Zusammenhang stehenden Größe wenigstens eine Applikation aktivierbar oder deaktivierbar sein. Dadurch kann sichergestellt werden, dass nur solche Applikationen zugänglich sind, die unter den gegebenen Bedingungen auch tatsächlich ausgeführt werden können. In entsprechender Weise kann der Ablauf wenigstens einer Applikation beeinflussbar sein und dadurch optimal an die aktuellen Verhältnisse angepasst werden. Ähnliches gilt auch für Daten, die von wenigstens einer Applikation verwendet werden. Die Applikation kann beispielsweise dazu dienen, mit dem Mobilfunktelefon die Inanspruchnahme eines Dienstes abzuwickeln.

In einer Ausgestaltung der Erfindung sind im Sicherheitsmodul mehrere Telefonbücher gespeichert, wobei wenigstens ein Telfonbuch abhängig von der mit der Nutzung des Mobilfunktelefons in Zusammenhang stehenden Größe auswählbar ist.

Die abhängig von der mit der Nutzung des Mobilfunktelefons in Zusammenhang stehenden Größe vorgesehenen Aktionen können im Anschluss an die Inbetriebnahme des Sicherheitsmoduls durchführbar sein. Zudem ist es auch möglich, dass diese Aktionen bei einer Änderung der Größe durchführbar sind. Dadurch kann sichergestellt werden, dass die Aktionen jeweils auf den aktuellen Wert der Größe abgestimmt sind.

Im Sicherheitsmodul kann ein Satz von Kommandos implementiert sein, die durch das Mobilfunktelefon ausführbar sind und mit denen die abhängig von der mit der Nutzung des Mobilfunktelefons in Zusammenhang stehenden Größe vorgesehenen Aktionen durchführbar sind. Vorzugsweise handelt es sich bei den Kommandos vorzugsweise um den in der Mobilfunkspezifikation GSM 11.14 genormten SIM Application Toolkit bzw. Kommandos aus den daraus abgeleiteten Nachfolgenormen.

Die Erfindung bezieht sich weiterhin auf ein Mobilfunktelefon mit dem erfindungsgemäß ausgebildeten Sicherheitsmodul.

Schließlich bezieht sich die Erfindung auf ein Verfahren zum Betreiben eines Sicherheitsmoduls für ein Mobilfunktelefon, das über eine Anzeige zur Darstellung eines Menüs zur Unterstützung der Bedienung des Mobilfunktelefons verfügt. Das erfindungsgemäße Verfahren zeichnet sich dadurch aus, dass vom Sicherheitsmodul die Ausgestaltung des vom Mobilfunktelefon angezeigten Menüs abhängig von wenigstens einer mit der Nutzung des Mobilfunktelefons in Zusammenhang stehenden Größe beeinflusst wird.

Die Erfindung wird nachstehend anhand des in der Zeichnung dargestellten Ausführungsbeispiels sowie zugehöriger Weiterbildungen und Abwandlungen erläutert.

Es zeigen:
- Fig. 1: ein Ausführungsbeispiel für ein Mobilfunktelefon mit einem erfindungsgemäß ausgebildeten Sicherheitsmodul in einer schematischen Blockdarstellung,
- Fig. 2: ein Flussdiagramm zur Veranschaulichung einiger Abläufe im Zusammenhang mit dem Betrieb des Sicherheitsmoduls und
- Fig. 3: ein Flussdiagramm, das im Anschluss an das in Fig. 2 dargestellte Flussdiagramm durchlaufen werden kann.

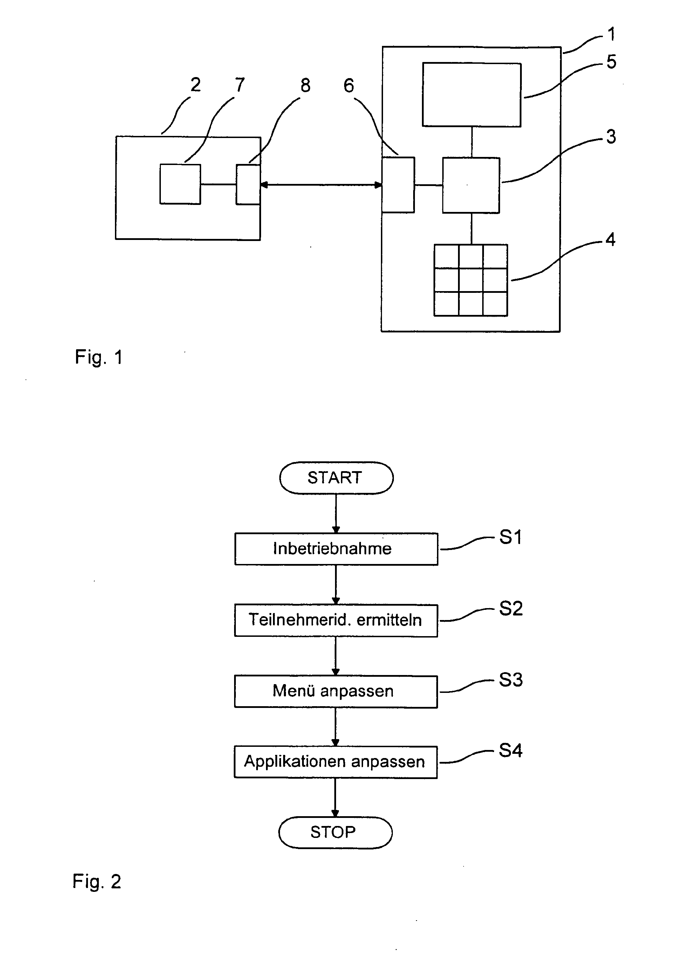

Fig.1 zeigt ein Ausführungsbeispiel für ein Mobilfunktelefon 1 mit einem erfindungsgemäß ausgebildeten Sicherheitsmodul 2 in einer schematischen Blockdarstellung. Die Darstellung ist stark vereinfacht und zeigt lediglich einige wenige Funktionselemente. Das Mobilfunktelefon 1 weist eine Steuerelektronik 3 auf, die beispielsweise als ein Mikroprozessor ausgebildet ist. Weiterhin weist das Mobilfunktelefon 1 eine Tastatur 4, eine Anzeige 5 und eine Kontaktiereinheit 6 auf, die jeweils mit der Steuerelektronik 3 verbunden sind. Das Sicherheitsmodul 2 ist beispielsweise als eine Chipkarte ausgebildet, die über einen integrierten Schaltkreis 7 und ein damit verbundenes Kontaktfeld 8 verfügt. In der Regel ist das Sicherheitsmodul 2 physisch innerhalb des Mobilfunktelefons 1 angeordnet. Dabei kann beim dargestellten Ausführungsbeispiel das Sicherheitsmodul 2 so in das Mobilfunktelefon 1 eingesteckt sein, dass das Kontaktfeld 8 des Sicherheitsmoduls 2 durch die Kontaktiereinheit 6 des Mobilfunktelefons 1 berührend kontaktiert wird und dadurch eine Datenverbindung zwischen dem Mobilfunktelefon 1 und dem Sicherheitsmodul 2 hergestellt wird.

Das Sicherheitsmodul 2 kann ein proprietäres Betriebssystem aufweisen oder als ein JAVA-Baustein ausgebildet sein und dient insbesondere dazu, den Nachweis für eine Zugangsberechtigung zum Mobilfunknetz zu erbringen. Hierzu sind im Sicherheitsmodul 2 mehrere eindeutige Teilnehmeridentitäten gespeichert, unter denen das Mobilfunktelefon 1 wahlweise im Mobilfunknetz angemeldet werden kann. Die unterschiedlichen Teilnehmeridentitäten können beispielsweise zur Unterscheidung einer privaten und einer geschäftlichen Nutzung des Mobilfunktelefons 1 verwendet werden oder sich auf unterschiedliche Abrechnungsarten, wie beispielsweise Vorauszahlung oder Zahlung per Rechnung, beziehen. Das Sicherheitsmodul 2 dient weiterhin der Speicherung von Kurznachrichten und eines oder mehrerer persönlicher Telefonbücher.

Außerdem ist im Sicherheitsmodul 2 ein in der Mobilfunkspezifikation GSM 11.14 genormter SIM Application Toolkit oder ein Toolkit aus einer daraus abgeleiteten Nachfolgenorm implementiert. SIM steht dabei für Subscriber Identity Module und bezeichnet das Sicherheitsmodul 2. Der SIM Application Toolkit besteht aus einer Reihe von Kommandos, die dem Sicherheitsmodul 2 einen direkten Zugriff auf Funktionen des Mobilfunktelefons 1, wie beispielsweise Ansteuerung der Anzeige 5, Abfrage der Tastatur 4, Versenden von Kurznachrichten usw., ermöglichen. Die Kommandos werden jeweils auf eine diesbezügliche Anfrage des Mobilfunktelefons 1 vom Sicherheitsmodul 2 zur Ausführung an die Steuerelektronik 3 des Mobilfunktelefons 1 übermittelt. Mit Hilfe des SIM Application Toolkit kann ein auf der Anzeige 5 des Mobilfunktelefons 1 dargestelltes Menü, das die Bedienung des Mobilfunktelefons 1 erleichtern soll, beeinflusst werden. Außerdem sind im Sicherheitsmodul 2 Applikationen auf Basis des SIM Application Toolkit implementiert.

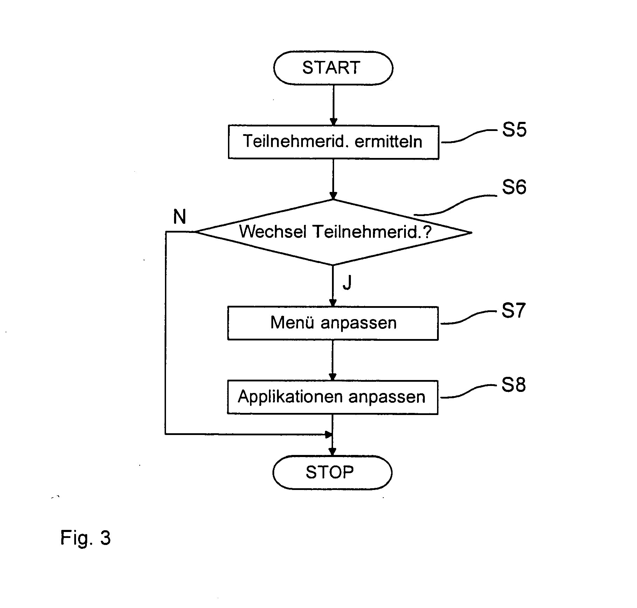

Im Rahmen der Erfindung ist es vorgesehen, das auf der Anzeige 5 des Mobilfunktelefons 1 dargestellte Menü durch das Sicherheitsmodul 2 zu beeinflussen, um eine möglichst optimale Bedienung des Mobilfunktelefons 1 zu ermöglichen. Beispielsweise erfolgt die Beeinflussung des Menüs durch das Sicherheitsmodul 2 abhängig davon, mit welcher Teilnehmeridentität das Mobilfunktelefon 1 im Mobilfunknetz angemeldet ist. Auf diese Weise wird das Menü jeweils auf die aktuelle Teilnehmeridentität abgestimmt und dadurch eine optimale Benutzerführung ermöglicht. Anstelle der Teilnehmeridentität oder zusätzlich zu dieser können auch andere Größen für die Beeinflussung des Menüs herangezogen werden. Außerdem kann nicht nur das Menü beeinflusst werden, sondern es kann beispielsweise auch festgelegt werden, welche Applikationen verfügbar sind, wie die Applikationen ablaufen, welche Daten von den Applikationen verwendet werden usw. Dies wird jeweils im Einzelnen anhand von Fig. 2 und Fig. 3 erläutert.

Fig. 2 zeigt ein Flussdiagramm zur Veranschaulichung einiger Abläufe im Zusammenhang mit dem Betrieb des Sicherheitsmoduls 2. Der Durchlauf des Flussdiagramms beginnt mit einem Schritt S1, in dem das Sicherheitsmodul 2 in Betrieb genommen wird. Die Inbetriebnahme wird beispielsweise durch Einschalten des Mobilfunktelefons 1 ausgelöst, in welches das Sicherheitsmodul 2 eingesteckt ist. Im Rahmen der Inbetriebnahme wird das Mobilfunktelefon 1 mit einer der im Sicherheitsmodul 2 gespeicherten Teilnehmeridentitäten im Mobilfunknetz angemeldet. An Schritt S1 schließt sich ein Schritt S2 an, bei dem vom Sicherheitsmodul 2 ermittelt wird, mit welcher Teilnehmeridentität das Mobilfunktelefon 1 aktuell im Mobilfunknetz angemeldet ist. Auf Basis dieser Information wird in einem darauf folgenden Schritt S3 das auf der Anzeige 5 des Mobilfunktelefons 1 dargestellte Menü beeinflusst. Hierzu werden Daten für das Menü vom Sicherheitsmodul 2 an das Mobilfunktelefon 1 übertragen. Das Mobilfunktelefon 1 stellt dann auf seiner Anzeige 5 ein entsprechend den übertragenen Daten angepasstes Menü dar. Die Anpassung erfolgt beispielsweise derart, dass im Menü ausschließlich solche Menüpunkte enthalten sind, die mit der aktuellen Teilnehmeridentität auch tatsächlich verfügbar sind.

Nach Schritt S3 wird ein Schritt S4 ausgeführt, bei dem eine Anpassung der im Sicherheitsmodul 2 implementierten Applikationen vorgenommen wird. Diese Anpassung kann so ausgestaltet sein, dass lediglich Applikationen für eine potentielle Nutzung aktiviert werden, die mit der aktuellen Teilnehmeridentität tatsächlich genutzt werden können. Alle anderen Applikationen des Sicherheitsmoduls 2 werden deaktiviert. Weiterhin können die Applikationen in ihren Abläufen auf die aktuelle Teilnehmeridentität abgestimmt werden. Ebenso können auch die Daten der Applikationen auf die aktuelle Teilnehmeridentität abgestimmt werden. Die Applikationen können beispielsweise dazu dienen, die Inanspruchnahme von Diensten mit dem Mobilfunktelefon 1 abzuwickeln.

Mit Schritt S4 ist der Durchlauf des Flussdiagramms beendet. Wenn allerdings ein Wechsel der Teilnehmeridentität ohne erneute Inbetriebnahme des Sicherheitsmoduls 2 möglich ist, muss dafür Sorge getragen werden, dass die vorstehend beschriebenen Anpassungen nach dem Wechsel der Teilnehmeridentität erneut durchgeführt werden. Hierzu kann nach dem Durchlauf des in Fig. 2 dargestellten Flussdiagramms bis zur Außerbetriebnahme des Sicherheitsmoduls 2 fortwährend geprüft werden, ob ein Wechsel der Teilnehmeridentität stattgefunden hat und bei einer Detektion eines Wechsels entsprechend reagiert werden. Diese Vorgehensweise ist in Fig. 3 dargestellt.

Fig. 3 zeigt ein Flussdiagramm, das im Anschluss an das in Fig. 2 dargestellte Flussdiagramm durchlaufen werden kann. Der Durchlauf des Flussdiagramms beginnt mit einem Schritt S5, bei dem in entsprechender Weise wie beim Schritt S2 des in Fig. 2 dargestellten Flussdiagramms die Teilnehmeridentität ermittelt wird, mit der das Mobilfunktelefon 1 aktuell im Mobilfunknetz angemeldet ist. Auf Schritt S5 folgt eine Schritt S6, bei dem geprüft wird, ob ein Wechsel in der Teilnehmeridentität erfolgt ist. Hierzu wird geprüft, ob sich die in Schritt S5 ermittelte Teilnehmeridentität von einer bis dahin zugrunde gelegten Teilnehmeridentität unterscheidet. Falls dies nicht der Fall ist, ist der Durchlauf des Flussdiagramms beendet. Wird dagegen in Schritt S6 ein Wechsel der Teilnehmeridentität festgestellt, so schließt sich an Schritt S6 ein Schritt S7 an. In Schritt S7 wird in analoger Weise wie in Schritt S3 des in Fig. 2 dargestellten Flussdiagramms das Menü an die neue Teilnehmeridentität angepasst. Auf Schritt S7 folgt ein Schritt S8, bei dem analog zu Schritt S4 des in Fig. 2 dargestellten Flussdiagramms die Applikationen an die neue Teilnehmeridentität angepasst werden. Mit Schritt S8 ist der Durchlauf des Flussdiagramms beendet. Nach Beendung des Flussdiagramms wird dieses erneut gestartet, um erneut zu ermitteln, ob ein Wechsel der Teilnehmeridentität stattgefunden hat. Dies bedeutet, dass auf eine einmalige Ausführung des in Fig. 2 dargestellten Flussdiagramms in der Regel eine vielfache Ausführung des in Fig. 3 dargestellten Flussdiagramms folgt.

Zusätzlich oder alternativ zu den beschriebenen Anpassungsmaßnahmen können abhängig von der jeweils ermittelten Teilnehmeridentität weitere Maßnahmen durchgeführt werden. So kann bei einem Sicherheitsmodul 2, in dem mehrere Telefonbücher gespeichert sind, eine Auswahl eines oder mehrerer Telefonbücher in Abhängigkeit von der aktuellen Teilnehmeridentität durchgeführt werden. Die Telefonbücher können beispielsweise Kurzrufnummern, Festrufnummern und/ oder Servicerufnummern enthalten.

In einer Abwandlung der Erfindung erfolgen die Anpassung des Menüs und die sonstigen Maßnahmen nicht oder nicht nur auf Basis der jeweils aktuellen Teilnehmeridentität, sondern auf Basis des aktuellen Aufenthaltsorts des Mobilfunktelefons 1. Diese Daten kann das Sicherheitsmodul 2 mit einem Kommando PROVIDE LOCAL INFORMATION bzw. LOCAL UPDATE EVENT ermitteln. Die Ortsinformationen können beispielsweise dazu verwendet werden, Applikationen mit einem Ortsbezug zu aktivieren oder zu deaktivieren.

Ebenso ist es auch möglich, Anpassungen auf Basis des aktuell verfügbaren Mobilfunknetzes vorzunehmen. So können bei einer Verfügbarkeit eines GPRS-Netzes oder eines Netzes der dritten Generation, wie beispielsweise eines UMTS-Netzes, verglichen mit dem Fall, dass lediglich ein GSM-Netz verfügbar ist, zusätzliche Applikationen aktiviert werden. GPRS steht dabei für General Packet Radio System, UMTS für Universal Mobile Telecommunication System und GSM für Global System for Mobile Communication.

## Patentansprüche

1. Sicherheitsmodul für ein Mobilfunktelefon (1), das über eine Anzeige (5) zur Darstellung eines Menüs zur Unterstützung der Bedienung des Mobilfunktelefons (1) verfügt, **dadurch gekennzeichnet, dass** im Sicherheitsmodul (2) eine Funktionalität zur Beeinflussung der Ausgestaltung des vom Mobilfunktelefon (1) angezeigten Menüs abhängig von wenigstens einer mit der Nutzung des Mobilfunktelefons (1) in Zusammenhang stehenden Größe implementiert ist.

2. Sicherheitsmodul nach Anspruch 1, **dadurch gekennzeichnet, dass** darin mehrere Teilnehmeridentitäten zur Anmeldung des Mobilfunktelefons (1) in einem Mobilfunknetz gespeichert sind.

3. Sicherheitsmodul nach Anspruch 2, **dadurch gekennzeichnet, dass** die Beeinflussung der Ausgestaltung des vom Mobilfunktelefon (1) angezeigten Menüs abhängig davon erfolgt, mit welcher Teilnehmeridentität das Mobilfunktelefon (1) im Mobilfunknetz angemeldet ist.

4. Sicherheitsmodul nach einem der vorhergehenden Ansprüche, **dadurch gekennzeichnet, dass** die Beeinflussung der Ausgestaltung des vom Mobilfunktelefon (1) angezeigten Menüs abhängig vom Aufenthaltsort des Mobilfunktelefons (1) erfolgt.

5. Sicherheitsmodul nach einem der vorhergehenden Ansprüche, **dadurch gekennzeichnet, dass** die Beeinflussung der Ausgestaltung des vom Mobilfunktelefon (1) angezeigten Menüs abhängig vom verfügbaren Mobilfunknetz erfolgt.

6. Sicherheitsmodul nach einem der vorhergehenden Ansprüche, **dadurch gekennzeichnet, dass** abhängig von der mit der Nutzung des Mobilfunktelefons (1) in Zusammenhang stehenden Größe wenigstens eine Applikation aktivierbar oder deaktivierbar ist.

7. Sicherheitsmodul nach einem der vorhergehenden Ansprüche, **dadurch gekennzeichnet, dass** abhängig von der mit der Nutzung des Mobilfunktelefons (1) in Zusammenhang stehenden Größe der Ablauf wenigstens einer Applikation beeinflussbar ist.

8. Sicherheitsmodul nach einem der vorhergehenden Ansprüche, **dadurch gekennzeichnet, dass** abhängig von der mit der Nutzung des Mobilfunktelefons (1) in Zusammenhang stehenden Größe Daten beeinflussbar sind, die von wenigstens einer Applikation verwendet werden.

9. Sicherheitsmodul nach einem der Ansprüche 6 bis 8, **dadurch gekennzeichnet, dass** mit Hilfe der Applikation die Inanspruchnahme eines Dienstes mit dem Mobilfunktelefon (1) abwickelbar ist.

10. Sicherheitsmodul nach einem der vorhergehenden Ansprüche, **dadurch gekennzeichnet, dass** darin mehrere Telefonbücher gespeichert sind und wenigstens ein Telfonbuch abhängig von der mit der Nutzung des Mobilfunktelefons (1) in Zusammenhang stehenden Größe auswählbar ist.

11. Sicherheitsmodul nach einem der vorhergehenden Ansprüche, **dadurch gekennzeichnet, dass** die abhängig von der mit der Nutzung des Mobilfunktelefons (1) in Zusammenhang stehenden Größe vorgesehenen Aktionen im Anschluss an die Inbetriebnahme des Sicherheitsmoduls (2) durchführbar sind.

12. Sicherheitsmodul nach einem der vorhergehenden Ansprüche, **dadurch gekennzeichnet, dass** die abhängig von der mit der Nutzung des Mobilfunktelefons (1) in Zusammenhang stehenden Größe vorgesehenen Aktionen bei einer Änderung der Größe durchführbar sind.

13. Sicherheitsmodul nach einem der vorhergehenden Ansprüche, **dadurch gekennzeichnet, dass** darin ein Satz von Kommandos implementiert ist, die durch das Mobilfunktelefon (1) ausführbar sind und mit denen die abhängig von der mit der Nutzung des Mobilfunktelefons (1) in Zusammenhang stehenden Größe vorgesehenen Aktionen durchführbar sind.

14. Sicherheitsmodul nach Anspruch 13, **dadurch gekennzeichnet, dass** es sich bei den Kommandos um den in der Mobilfunkspezifikation GSM 11.14 genormten SIM Application Toolkit oder Kommandos aus einer daraus abgeleiteten Nachfolgenorm handelt.

15. Mobilfunktelefon mit einer Anzeige (5) zur Darstellung eines Menüs zur Unterstützung der Bedienung, **dadurch gekennzeichnet, dass** es ein Sicherheitsmodul (2) nach einem der vorhergehenden Ansprüche aufweist.

16. Verfahren zum Betreiben eines Sicherheitsmoduls (2) für ein Mobilfunktelefon (1), das über eine Anzeige (5) zur Darstellung eines Menüs zur Unterstützung der Bedienung des Mobilfunktelefons (1) verfügt, **dadurch gekennzeichnet, dass** vom Sicherheitsmodul (2) die Ausgestaltung des vom Mobilfunktelefon (1) angezeigten Menüs abhängig von wenigstens einer mit der Nutzung des Mobilfunktelefons (1) in Zusammenhang stehenden Größe beeinflusst wird.
